# EUROPEAN PATENT APPLICATION

(11) **EP 4 391 214 A1**
(43) Date of publication of application: **26.06.2024**
(21) Application number: 22929435.0
(22) Date of filing: 18.04.2022
(51) Int. Cl.: H01M 50/597

(54) **END COVER ASSEMBLY, BATTERY CELL, BATTERY AND ELECTRIC DEVICE**

(30) Priority: 03.03.2022 CN 202220469004 U
(71) Applicant: Contemporary Amperex Technology Co., Limited, Ningde, Fujian 352100 (CN)
(72) Inventor: DU, Xianglong, Ningde, Fujian 352100 (CN); JIN, Yikuang, Ningde, Fujian 352100 (CN); XU, Hu, Ningde, Fujian 352100 (CN); NIU, Shaojun, Ningde, Fujian 352100 (CN)
(74) Representative: Holt, Lucy Rose
(86) International application number: PCT/CN2022/087466
(87) International publication number: WO 2023/164997

(57) **Abstract**

The present application relates to an end cover assembly (100), a battery cell (1000), a battery and an electric device. The end cover assembly comprises an end cover (10) and a current-collecting component (20), wherein the end cover (10) is provided with a pressure-relief structure (30). The current-collecting member (20) is located on one side of the end cover (10) facing the interior of the battery cell (1000), and comprises a current-collecting portion (22) and an assembling portion (21)., the assembling portion (21) being located between the end cover (10) and the current-collecting portion (22), and being used for being connected to the end cover (10) and the current-collecting portion (22), and the current-collecting portion (22) being provided with pressure-relief holes (22a) allowing fluid to pass therethrough. Two side surfaces, facing each other, of the end cover (10) and the current-collecting portion (22) are respectively provided with a first support member (11) and a second support member (22b), and projections of the first support member (11) and the second support member (22b) in the thickness direction of the end cover (10) intersect each other, so as to always maintain a pressure-relief space between the end cover (10) and the current-collecting portion (22) for fluid to flow from the pressure-relief holes (22a) to the pressure relief structure (30).

## Description

### Cross-Reference

The present application is based on Chinese patent application No. 202220469004.4, filed on March 03, 2022 and entitled "END COVER ASSEMBLY, BATTERY CELL, BATTERY, AND ELECTRICAL APPARATUS", which is incorporated into this application by reference in its entirety.

### Technical Field

The present application relates to the technical field of batteries, and in particular, to an end cover assembly, a battery cell, a battery, and an electrical apparatus.

### Background

With the continuous application and development of new energy batteries, people have higher and higher requirements for the safety performance of the new energy batteries.

In the related art, in order to improve the safety performance of a battery cell, a pressure relief structure is usually arranged on an end cover, and pressure relief holes are formed in a current collecting member. Gas generated by an electrode assembly or liquid in the battery cell is discharged to the pressure relief structure through the pressure relief holes. When an internal pressure of a case reaches a pressure threshold, the pressure relief structure is pushed open to relieve the pressure. However, the existing battery cell has the problem that the pressure relief holes are easily blocked in the case of a thermal failure, so that the pressure relief structure cannot be opened in time, which poses a great safety hazard.

### Summary of the Invention

In view of this, the present application provides an end cover assembly, a battery cell, a battery, and an electrical apparatus.

In a first aspect, the present application provides an end cover assembly, applied to a battery cell, and the end cover assembly includes an end cover and a current collecting member. The end cover is provided with a pressure relief structure, and the pressure relief structure is configured to act when heat or pressure inside the battery cell reaches a threshold, so as to release the heat or pressure. The current collecting member is located on one side of the end cover facing the interior of the battery cell and includes a current collecting portion and an assembling portion, wherein the assembling portion is located between the end cover and the current collecting portion and is configured to be connected to the end cover and the current collecting portion; and the current collecting portion is provided with pressure relief holes for allowing fluid to pass. First supporting members and a second supporting member are separately arranged on two side surfaces, facing each other, of the end cover and the current collecting portion; and projections of the first supporting members and a projection of the second supporting member are intersected in a thickness direction of the end cover, so as to ensure that a pressure relief space in which the fluid flows from the pressure relief holes to the pressure relief structure always exists between the end cover and the current collecting portion.

In the technical solutions of the embodiments of the present application, when the internal pressure and heat of the battery cell rapidly increases due to a thermal failure of the battery cell, one certain pressure relief space is always maintained between the current collecting portion and the end cover because the first supporting members and the second supporting member can lean against each other. The fluid inside the battery cell flows to the pressure relief structure through the pressure relief hole. When the pressure and heat in the pressure relief space reach thresholds, the pressure relief structure acts and communicates the inside to the outside of the battery cell to relieve the pressure smoothly, avoiding the problem of explosion due to an extremely high internal pressure because of the failure of pressure relief.

In some embodiments, in the thickness direction of the end cover, projections of the pressure relief holes and a projection of the pressure relief structure are staggered. This design is to prevent tabs from passing through the pressure relief holes and coming into contact with the end cover to cause electric leakage.

In some embodiments, in the thickness direction of the end cover, the projections of the first supporting members and the projection of the pressure relief structure are not intersected. In this way, it is possible to prevent the first supporting members from hindering the fluid from flowing towards a pressure relief port, which facilitates rapid pressure relief, and has a simple structure.

In some embodiments, the quantity of the first supporting members is at least two, and all the first supporting members are spaced apart from each other around the pressure relief structure. At this time, all the first supporting members surround the pressure relief port at which the pressure relief structure is located and are spaced apart from each other, which can effectively support the second supporting member around the pressure relief port to achieve efficient pressure reli ef.

In some embodiments, in the thickness direction of the end cover, the projections of all the first supporting members are within a projection range of the second supporting member. At this time, the first supporting members can be fully supported on the second supporting member, which has a large supporting area and a good supporting effect.

In some embodiments, in the thickness direction of the end cover, the projection of the second supporting member and the projection of the pressure relief structure are intersected. This not only more reliably reduces the possibility of deformation of the current collecting portion corresponding to a pressure relief mechanism at a high temperature and a high pressure, but also has a simple structure and saves material.

In some embodiments, the first supporting members are configured to be insulated from the current collecting portion. In this way, a current on the current collecting portion can be at least avoided in a normal state from being transferred to the end cover to leak electricity.

In some embodiments, the end cover assembly further includes a first insulating member; the first insulating member is mounted to the end cover; and at least part of the first insulating member is located between the current collecting member and the end cover, so as to insulate the end cover from the current collecting member. In this way, the end cover can be insulated from the current collecting member, and electric leakage of the end cover can be avoided.

In some embodiments, avoidance portions are arranged at positions, corresponding to the first supporting members, on the first insulating member, and the avoidance portions cooperate with the first supporting members, to accommodate the first supporting members. In this way, the insulation property of the first insulating member itself can be used to insulate the first supporting members from the current collecting portion. The first supporting members can be made of the same material as the end cover, and the first supporting members can be connected to the end cover in a more reliable and easier way.

In some embodiments, the avoidance portions are first concave portions formed on a surface of the first insulating member facing the end cover and sunken in a direction away from the end cover; the first supporting members are in concave-convex fit with the first concave portions, so that the first supporting members are accommodated in the first concave portions, and ends of the first concave portions away from the end cover are closed to insulate and isolate the first supporting members from the current collecting portion. In this way, it can be avoided that the current collecting portion and the first supporting members are conductive in a normal state.

In some embodiments, the avoidance portions are through holes penetrating through the first insulating member in a thickness direction of the first insulating member, and the first supporting members are plugged into the through holes. At this time, the through holes can avoid the first supporting members, so that a thickness of the first insulating member can be reduced.

In some embodiments, in the thickness direction of the end cover, a height of each first supporting member is less than a depth of each through hole, so that after the first supporting members are plugged into the through holes, the first supporting members are not in contact with the current collecting portion. In a thermal failure state, due to a high internal temperature of the battery cell, the first insulating member is melted, but in the normal state, the first insulating member will not be melted, so the first supporting members are accommodated in the through holes and do not extend out of the through holes. The first insulating member can be used to insulate the first supporting members from the current collecting portion, which achieves a simple structure and low cost.

In some embodiments, the first supporting members are arranged on the surface of the end cover facing the interior of the battery cell; the first supporting members are cylindrical bosses; the second supporting member is arranged on a surface of the current collecting portion facing the end cover; the second supporting member is a bump; and in the thickness direction of the end cover, projections of the bosses are located within a projection of the bump, and the projection of the bump is intersected with the projection of the pressure relief structure. At this time, the first supporting members and the second supporting member have simple structures and are easy to manufacture.

In some embodiments, the assembling portion includes an assembling section and a folded section connected with each other; the assembling section is in insulating connection to the end cover; two ends of the folded section are respectively connected to the assembling section and the current collecting portion, and the two ends are separately bent relative to the assembling section and the current collecting portion; and the current collecting portion is located on one side of the assembling section facing away from the end cover. In actual operation, the current collecting member can be straightened and stretched first to weld a terminal post to the assembling section, and then the folded section is bent to form a pressure relief gap, which is more convenient for welding the terminal post to the assembling section.

In a second aspect, the present application provides a battery cell, including the end cover assembly in the above embodiments.

In a third aspect, the present application provides a battery, including the battery cell in the above embodiment.

In a fourth aspect, the present application provides an electrical apparatus, including the battery in the above embodiment. The battery is configured to provide electric energy.

The above descriptions are only a summary of the technical solutions of the present application. In order to be able to understand the technical means of the present application more clearly, the technical means can be implemented according to the content of the specification. Furthermore, in order to make the above and other objectives, features and advantages of the present application more comprehensible, specific implementations of the present application are exemplified below.

### Brief Description of the Drawings

Various other advantages and benefits will become apparent to those of ordinary skill in the art upon reading the following detailed description of the preferred implementations. The drawings are for the purpose of illustrating the preferred implementations only and are not to be considered as a limitation on the present application. Furthermore, the same components are denoted by the same reference numerals throughout the drawings. In the drawings:
Fig. 1 is a schematic diagram of a structure of an end cover assembly in one embodiment of the present application;
Fig. 2 is an exploded diagram of the end cover assembly shown in Fig. 1 before assembling;
Fig. 3 is a schematic diagram of a structure of a current collecting member in the end cover assembly shown in Fig. 2;
Fig. 4 is a schematic diagram of a structure of an end cover in the end cover assembly shown in Fig. 2; and
Fig. 5 is a schematic diagram of a structure of a battery cell in an embodiment of the present application.

Numerals in the specific implementations are as follows:
1000, battery cell; 100, end cover assembly; 10, end cover; 11, first supporting member; 12, pressure relief port; 20, current collecting member; 21, assembling portion; 21a, assembling section; 21b, folded section; 22, current collecting portion; 22a, pressure relief hole; 22b, second supporting member; 30, pressure relief structure; 40, first insulating member; 41, avoidance portion; 50, second insulating member; 60, terminal post; 70, sealing member; 80, riveting member; 200, case; 300, an electrode assembly; 510, first tab tape; and 520, second tab tape.

### Detailed Description

The embodiments of the technical solutions of the present application are described in detail in combination with the accompanying drawings below. The following embodiments are only configured to more clearly illustrate the technical solutions of the present application, and therefore are only used as examples and cannot be configured to limit the scope of protection of the present application.

Unless otherwise defined, all technical and scientific terms used herein have the same meaning as commonly understood by those skilled in the art of the present application. The terms used herein are intended only for the purpose of describing specific embodiments and are not intended to limit the present application. The terms "include" and "has/have", as well as any variations thereof, in the specification and claims of the present application, as well as the accompanying drawings, are intended to encompass non-exclusive inclusion.

In the description of the embodiments of the present application, the technical terms "first", "second", and the like are only for distinguishing different objects, and may not be understood as indicating or implying the relative importance or implicitly indicating the number, specific order or primary and secondary relations of the technical features indicated. In the description of the embodiments of the present application, "plurality" means more than two, unless otherwise expressly and specifically defined.

Reference to "an embodiment" herein means that a particular feature, structure or characteristic described in conjunction with an embodiment may be included in at least one embodiment of the present application. The phrase shown in various locations in the specification may not necessarily refer to the same embodiment, and is not an independent or optional embodiment exclusive from another embodiment. It is explicitly and implicitly understood by those skilled in the art that the embodiments described herein may be combined with other embodiments.

In the descriptions of the embodiments of the present application, the term "and/or" only describes an association relation of associated objects and represents that three relations may exist. For example, A and/or B may represent three situations: A exists alone; A and B exist simultaneously; and B exists alone. In addition, the character "/" herein usually indicates an "or" relation between associated objects.

In the descriptions of the embodiments of the present application, the term "plurality" refers to more than two (including two), and similarly, "a plurality of groups" refers to more than two groups (including two groups); and "a plurality of sheets" refers to more than two sheets (including two sheets).

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the descriptions of the embodiments of the present application, unless otherwise expressly specified and limited, the technical terms "mount," "connect", "connection", "fix" and the like should be understood in a broad sense, such as, a fixed connection, a detachable connection, an integrated connection, a mechanical connection, an electrical connection, a direct connection, an indirect connection through an intermediate medium, an internal communication of two elements, or interaction between two elements. Those of ordinary skill in the art can understand the specific meanings of the above terms in the embodiments of the present application according to specific situations.

In the related art, a current collecting member inside a battery cell is provided with pressure relief holes, and an end cover is provided with a pressure relief structure. In order to avoid corrosion liquid leakage of a battery caused by tabs lapping the end cover through the pressure relief holes, the pressure relief holes and a pressure relief structure are generally arranged in a staggered manner. To this end, it is necessary to ensure that a gap for fluid to flow through the pressure relief holes to the pressure relief structure is formed between a current collecting plate of the current collecting member with the pressure relief holes and the end cover.

The inventors have noticed that when a thermal failure occurs in a battery, especially in a cylindrical battery, since the current collecting portion of the current collecting member of the battery is relatively thin, when internal heat or pressure is too high, the current collecting portion easily deforms towards the end cover, which makes the current collecting portion closely abut against the end cover, thereby blocking the pressure relief structure and the pressure relief hole. As a result, the fluid inside the battery cell cannot flow from the pressure relief holes to the pressure relief structure and be discharged smoothly (a failure of pressure relief), causing explosion of the battery.

In order to avoid the explosion of the battery due to the failure of pressure relief caused by the blockage of the pressure relief structure and the pressure relief holes during the thermal failure of the battery, the applicant has found via researches that the strength of the current collecting portion and the strength of the end cover can be partially enhanced, and a pressure relief space can be constructed, so as to avoid the deformation of the current collecting portion at a high pressure or a high temperature and to achieve close abutment against the end cover. Specifically, a supporting structure is arranged between the current collecting portion and the end cover. Even under the thermal failure, the current collecting portion and the end cover can always be spaced apart by the supporting structure, so as to maintain a pressure relief space between them to allow the fluid to flow from the pressure relief holes to the pressure relief structure.

Based on the above considerations, in order to solve the problem of the explosion of the battery due to the failure of pressure relief caused by the blockage of the pressure relief structure by the current collecting member during the thermal failure of the battery, the inventors have designed an end cover assembly via deep research. The first supporting members and the second supporting member are separately arranged on the end cover and the current collecting portion in the battery cell, and projections of the first supporting members and a projection of the second supporting member in a thickness direction of the end cover are intersected, which can ensure that there is always the pressure relief space between the end cover and the current collecting portion. Even in the thermal failure state, the pressure relief structure and the pressure relief holes will not be blocked, which ensures smooth pressure relief.

The present application provides an end cover assembly, a battery cell, a battery, and an electrical device. The battery includes a plurality of battery cells and a box body arranged outside the battery cells. The electrical device may be a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended range electric vehicle, or the like. The spacecraft includes an airplane, a rocket, a space shuttle, a spaceship, and the like. The electric toy includes fixed or mobile electric toys, such as a game machine, an electric vehicle toy, an electric ship toy, an electric airplane toy, and the like. The electric tool includes an electric metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer. The above electrical device is not specially limited in the embodiments of the present application.

Each battery cell generally includes a case, an electrode assembly, a terminal post, a current collecting member, and the like. The electrode assembly is arranged inside the case and is electrically connected to the terminal post through the current collecting member. The terminal post is exposed outside the case and is configured to be electrically connected to an external circuit. Electrolyte solution is injected into the case, enters a position between the terminal post pieces of the electrode assembly, and electrochemically reacts with an active material on a pole piece to generate charging and discharging processes.

In the present application, the battery cell may include a lithium-ion secondary battery, a lithium-ion primary battery, a lithium-sulfur battery, a sodium/lithium-ion battery, a sodium-ion battery, a magnesium-ion battery, or the like. The embodiments of the present application do not limit this. Each battery cell may be cylindrical, flat, cuboid, or in other shapes. The embodiments of the present application do not limit this. Battery cells are generally divided into three kinds according to packaging manners: cylindrical battery cells, square battery cells, and pouch cells. The embodiments of the present application do not limit this.

The battery usually includes a box body and a battery cell. The box body defines an accommodating cavity configured to accommodate the battery cell, and there may be one or more battery cells. If there are a plurality of battery cells, the plurality of battery cells may be connected in series or parallel or in parallel-series connection. The parallel-series connection means that the plurality of battery cells are connected in both series and parallel. The plurality of battery modules may be connected in series or in parallel or in parallel-series connection to form an entirety which is accommodated in the box body. All the battery cells may be directly connected in series or in parallel or in parallel-series connection, and then an entirety composed of all the battery cells is accommodated in the box body, to achieve assembling of the battery cells and the box body.

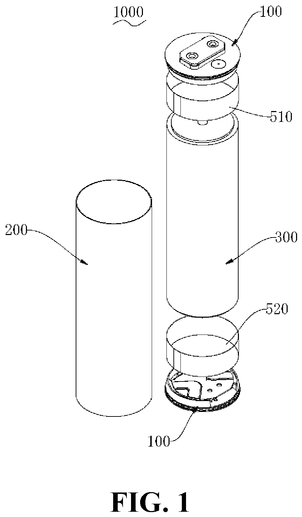

The end cover assembly 100 provided according to some embodiments of the present application is applied to a battery cell 1000. Referring to Fig. 1, Fig. 2, and Fig. 3, the end cover assembly 100 includes an end cover 10 and a current collecting member 20. The end cover 10 is provided with a pressure relief structure 30. The pressure relief structure 30 is configured to act when heat or pressure inside the battery cell 1000 reaches a threshold, so as to release the heat or pressure The current collecting member 20 is located on one side of the end cover 10 facing the interior of the battery cell 1000 and including a current collecting portion 22 and an assembling portion 21, wherein the assembling portion 21 is located between the end cover 10 and the current collecting portion 22 and is configured to be connected to the end cover 10 and the current collecting portion 22; and the current collecting portion 22 is provided with pressure relief holes 22a for allowing fluid to pass. First supporting members 11 and a second supporting member 22b are separately arranged on two side surfaces, facing each other, of the end cover 10 and the current collecting portion 22; and projections of the first supporting members 11 and a projection of the second supporting member 22b are intersected in a thickness direction of the end cover 10, so as to ensure that a pressure relief space in which the fluid flows from the pressure relief holes 22a to the pressure relief structure 30 always exists between the end cover 10 and the current collecting portion 22.

The end cover 10 is configured on one side inside the battery cell 1000 in a thickness direction of the battery cell. In a usage state, the current collecting portion 22 is configured to be connected (specifically welded) to a tab of an electrode assembly 300 inside the battery cell 1000, and the assembling portion 21 is connected to one end of a terminal post 60 of the battery cell 1000, and is in insulating connection to the end cover 10 via he terminal post 60. A current generated by the electrode assembly 300 is conducted to terminal post 60 through the tab and the current collecting member 20. Generally, a mounting hole is formed in the end cover 10, and the terminal post 60 is welded to the assembling portion 21 and is exposed outside of the battery cell 1000 through the mounting hole. The terminal post 60 is connected to the mounting hole through a sealing ring, so that fluid can be sealed and prevented from being leaked, and the terminal post can be insulated from the end cover 10 to avoid electric leakage of the end cover 10.

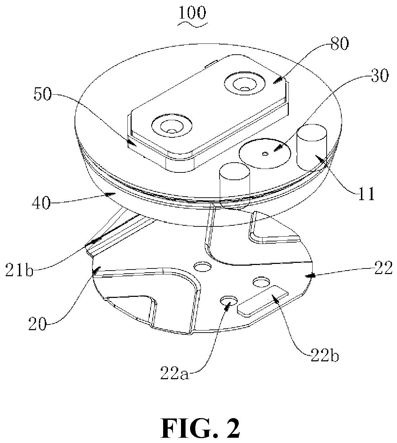

Understandably, referring to Fig. 2, the end cover 10 is provided with a pressure relief port 12. The pressure relief structure 30 is hermetically arranged at the pressure relief port 12. The fluid reaches the pressure relief port 12 through the pressure relief holes 22a, and finally when the pressure or heat reaches the threshold, the pressure relief structure 30 is opened to discharge the high-pressure fluid inside the battery cell 1000 out of the battery cell 1000. The pressure relief structure 30 may be, but not limited to, a weak portion (such as a pressure relief sheet) formed with a score groove.

In order to reduce the capacity of the battery cell 1000 occupied by the end cover assembly 100, the current collecting portion 22 is usually configured as a sheet structure. Further, a welding region of the current collecting portion 22 is welded to the tab of the electrode assembly 300. Furthermore, one end of the current collecting portion 22 is connected to the assembling portion 21, and the other opposite end is a free end (not connected to any part). The pressure relief holes 22a do not interfere with the welding region of the current collecting portion 22. The pressure relief holes 22a are located in a region close to the free end (of course, the form of the current collecting member 20 is not limited thereto). Usually, a certain gap is designed between the current collecting portion 22 and the end cover 10, and the pressure relief structure 30 and the pressure relief holes 22a are staggered (that is, a projection of the pressure relief structure 30 and projections of the pressure relief holes 22a in the thickness direction do not overlap). The gap between the current collecting portion 22 and the end cover 10 allows the fluid inside the battery cell 1000 to flow to the pressure relief structure 30 through the pressure relief holes 22a. The fluid may be gas generated inside the battery cell 1000, or liquid effluent such as electrolyte solution. Since the current collecting portion 22 is relatively thin, when the heat or pressure inside the battery cell 1000 is high, the free end of the current collecting portion 22 easily deforms towards the end cover 10 relative to the welding region.

The projections of the first supporting members 11 and the projection of the second supporting member 22b in the thickness direction of the end cover 10 are intersected, that is, orthographic projections of the first supporting members and an orthographic projection of the second supporting member in a plane perpendicular to the thickness direction of the end cover 10 are intersected (that is, at least partially overlap). When the free end of the current collecting portion 22 is pushed towards the end cover 10 under the action of the heat or pressure, the first supporting members 11 and the second supporting member 22b can lean against each other, so that the end cover 10 and the current collecting portion 22 can be prevented from approaching, and the current collecting portion 22 and the end cover 10 will not abut against each other completely to block the pressure relief structure 30 and the pressure relief holes 22a.

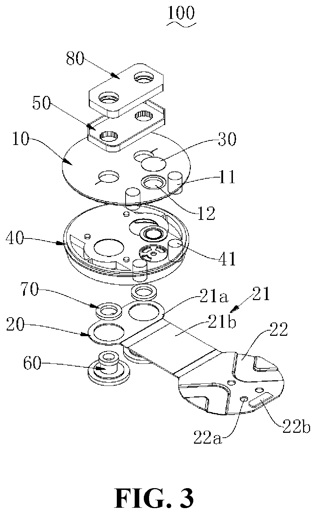

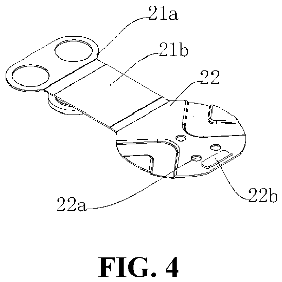

Both the first supporting members 11 and the second supporting member 22b can be integrally formed or fixedly connected with the end cover 10 and the current collecting portion 22 or fixed (for example, fixedly connected by welding or fasteners) respectively. Referring to Fig. 3 and Fig. 4, the first supporting members 11 and the second supporting member 22b can respectively be structural forms, such as supporting bosses, supporting convex pillars, supporting sheets, reinforcing ribs, and partially thickened structures, which are not specifically limited in the present application.

The first supporting members 11 and the second supporting member 22 b may always be in a leaning state, or they may only lean against each other when the free end of the current collecting portion 22 deforms towards the end cover 10. That is, the first supporting members 11 and the second supporting member 22b can lean against each other or separated from each other when the battery cell 1000 is in a normal state. The specific form is not limited, as long as the first supporting members 11 and the second supporting member 22b can lean against each other in a thermal failure state, and there is always a pressure relief space between the current collecting portion 22 and the end cover 10.

The above end cover assembly 100 is applied to the battery cell 1000. When the internal pressure and heat of the battery cell 1000 rapidly increases, one certain pressure relief space is always maintained between the current collecting portion 22 and the end cover 10 because the first supporting members 11 and the second supporting member 22b can lean against each other. The fluid (including the generated gas, the electrolyte solution, and a released material) inside the battery cell 1000 flows to the pressure relief structure 30 through the pressure relief holes 22a. When the pressure and heat in the pressure relief space reach the thresholds, the pressure relief structure 30 acts and communicates the inside to the outside of the battery cell 1000 to relieve the pressure smoothly, avoiding the problem of explosion due to an extremely high internal pressure because of the failure of pressure relief.

In some embodiments of the present application, in the thickness direction of the end cover 10, projections of the pressure relief holes 22a and a projection of the pressure relief structure 30 are not intersected.

The projections of the pressure relief holes 22a and the projection of the pressure relief structure 30 are intersected, which means that orthographic projections of the pressure relief holes and an orthographic projection of the pressure relief structure in a plane perpendicular to the thickness direction of the end cover 10 do not overlap at all. This design is to prevent the tabs from passing through the pressure relief holes 22a and coming into contact with the end cover 10 to cause electric leakage or corrosion.

It should be noted that the end cover 10 is usually a conductive component such as an aluminum cover and a copper cover. An insulating member is arranged on one side of the end cover 10 facing the interior of the battery cell 1000. The insulating member is located between the current collecting member 20 and the end cover 10 to insulate the current collecting member 20 from the end cover 10. An exposure hole is formed in a position of the insulating member corresponding to the pressure relief structure 30, to facilitate the pressure relief. In this solution, when the pressure relief holes 22a are facing the pressure relief structure 30, the tabs connected to the current collecting portion 22 easily pass through the pressure relief holes 22a and the exposure hole to become in contact with the end cover 10. The pressure relief holes 22a and the pressure relief structure 30 are staggered. Even if the tabs pass through the pressure relief holes 22a, the tabs will only become in contact with the insulating member, instead of the end cover 10, thereby preventing the end cover 10 from being charged and corroded.

Of course, in some embodiments, in the thickness direction of the end cover 10, the projections of the pressure relief holes 22a and the projection of the pressure relief structure 30 may be staggered. For example, when the end cover 10 itself has the insulation property, or when a surface of a position of the end cover 10 corresponding to the pressure relief structure 30 is provided with an insulating coating or the like, electric leakage caused by the tab becoming in contact with the end cover 10 can be avoided. Or, it is also not feasible to connect the tabs at the positions of the pressure relief holes 22a.

In some embodiments of the present application, referring to Fig. 2, in the thickness direction of the end cover 10, the projections of the first supporting members 11 and the projection of the pressure relief structure 30 are staggered.

That is, on a plane perpendicular to the thickness direction of the end cover 10, the orthographic projections of the first supporting members 11 do not overlap the orthographic projection of the pressure relief structure 30. In this way, it is possible to prevent the first supporting members 11 from hindering the fluid from flowing towards a pressure relief port 12, and at the same time, the opening of the pressure relief structure 30 will not be affected, which facilitates rapid pressure relief and has a simple structure.

Of course, in other embodiments, in the thickness direction of the end cover 10, the projections of the first supporting members 11 and the projection of the pressure relief structure 30 may be intersected, as long as the first supporting members 11 do not hinder the pressure relief. For example, the first supporting members 11 are set in a concave shape, and the pressure relief structure 30 is located at openings of the concave shapes. The first supporting members 11 are communicated with the pressure relief port 12 at which the pressure relief structure 30 is located and the pressure relief space.

In some embodiments of the present application, referring to Fig. 2 and Fig. 4, the quantity of the first supporting members 11 is at least two, and all the first supporting members 11 are spaced apart from each other around the pressure relief structure 30.

At this time, all the first supporting members 11 surround the pressure relief port 12 at which the pressure relief structure 30 is located and are spaced apart from each other, which can effectively support a periphery of the second supporting member 22b around the pressure relief port 12 to achieve efficient pressure relief. In one specific embodiment, there are two first supporting members 11, which have low cost and good support effect.

In some embodiments of the present application, in the thickness direction of the end cover 10, the projections of all the first supporting members 11 are within a projection range of the second supporting member 22b.

That is, in the plane perpendicular to the thickness direction of the end cover 10, the orthographic projections of all the first supporting members 11 are located within a range of an orthographic projection of the second supporting member 22b, including that a range of the orthographic projections of all the first supporting members 11 is less than a range of the orthographic projection of the second supporting member 22b, or including a range of the orthographic projections of all the first supporting members 11 is equal to the range of the orthographic projection of the second supporting member 22b. At this time, the first supporting members 11 can be fully supported on the second supporting member 22b, which has a large supporting area and a good supporting effect.

In some embodiments of the present application, referring to Fig. 1, in the thickness direction of the end cover 10, the projection of the second supporting member 22b and the projection of the pressure relief structure 30 are intersected.

Since all the first supporting members 11 surround the pressure relief structure 30. For example, there are two first supporting members 11. When the projection of the second supporting member 22b is intersected with the projection of the pressure relief structure 30, the second supporting member 22b can extend linearly from the position corresponding to one supporting member 11 to the position corresponding to the other first supporting member 11. Compared with a solution that the structure needs to be arc-shaped to bypass the pressure relief structure 30, this more reliably reduces the possibility of deformation of the current collecting portion corresponding to the pressure relief mechanism at a high temperature and a high pressure. Furthermore, the structure is simple, and more materials are saved.

It should be noted that when there is an insulating member (for example, a first insulating member 40 mentioned below) between the end cover 10 and the current collecting member 20, there is preferably a gap between the second supporting member 22b and the insulating member, or the exposure hole in the insulating member is greater than a size of the second supporting member 22b, so as to avoid the influence on the pressure relief due to the fact that the exposure hole in the insulating member is blocked by the second supporting member 22b.

In some embodiments of the present application, the first supporting members 11 are configured to be insulated from the current collecting portion 22.

The first supporting members 11 are insulated from the current collecting portion 22 in the following manner: the second supporting member 22b is an insulating member, or an insulating structure (such as the first insulating member 40 described below) is arranged between the first supporting members 11 and the current collecting portion 22, or the first supporting members 11 are insulating members. A specific manner is not limited. When the first supporting members 11 are insulated from the current collecting portion 22, at least in the normal state, the electric leakage in a normal state because a current on the current collecting portion 22 is conducted to the end cover 10 to avoid electric leakage.

In some embodiments of the present application, referring to Fig. 1 and Fig. 2, the end cover assembly 100 further includes a first insulating member 40. The first insulating member 40 is mounted to the end cover 10. At least part of the first insulating member 40 is located between the current collection member 20 and the end cover 10, so that the end cover 10 is insulated from the current collecting member 20. In this way, the end cover 10 can be insulated from the current collecting member 20, and electric leakage of the end cover 10 can be avoided. The first insulating member 40 may be, but not limited to, be made of plastic. It can be understood that the first insulating member 40 is provided with a structure that exposes the pressure relief port 12, such as an exposure hole.

In further embodiments of the present application, referring to Fig. 2, avoidance portions 41 are arranged at positions, corresponding to the first supporting members 11, on the first insulating member 40, and the avoidance portions 41 cooperate with the first supporting members 11, to accommodate the first supporting members 11.

At this time, the first supporting members 11 are accommodated in the avoidance portions 41, so that the insulation property of the first insulating member 40 itself can be used to insulate the first supporting members 11 from the current collecting portion 22. The first supporting members 11 can be made of the same material (for example, aluminum and copper) as the end cover 10, and the first supporting members 11 can be connected to the end cover 10 in a more reliable and easier way (for example, welding).

In further embodiments of the present application, the avoidance portions 41 are first concave portions formed on a surface of the first insulating member 40 facing the end cover 10 and sunken in a direction away from the end cover; the first supporting members 11 are in concave-convex fit with the first concave portions, so that the first supporting members 11 are accommodated in the first concave portions, and ends of the first concave portions away from the end cover 10 are closed to insulate and isolate the first supporting members 11 from the current collecting portion 22.

Specifically, the first concave portions may be structures such as grooves or blind holes. At this time, since the ends of the first concave portions away from the end cover 10 are closed, after the first supporting members 11 cooperate with the first concave portions, the closed ends of the first concave portions exist between the first supporting members 11 and the current collecting portion 22, which can avoid that the current collecting portion 22 and the first supporting members 11 are conductive in the normal state.

In further embodiments of the present application, the avoidance portions 41 are through holes penetrating through the first insulating member 40 in a thickness direction of the first insulating member 40, and the first supporting members 11 are plugged into the through holes.

The thickness direction of the first insulating member 40 is parallel to the thickness direction of the end cover 10. At this time, the through holes can avoid the first supporting members 11, and a thickness of the first insulating member 40 can be reduced. The insulation between the first supporting members 11 and the current collecting portion 22 can be achieved by using the first supporting members 11 as insulating members, arranging insulating layers at ends of the first supporting members 11 facing the current collecting portion 22, or the like.

In a preferred embodiment of the present application, in the thickness direction of the end cover 10, a height of each first supporting member 11 is less than a depth of each through hole, so that after the first supporting members 11 are plugged into the through holes, the first supporting members 11 are not in contact with the current collecting portion 22.

In a thermal failure state, due to a high internal temperature of the battery cell 1000, the first insulating member 40 is melted, but in the normal state, the first insulating member 40 will not be melted, so the first supporting members 11 are accommodated in the through holes and do not extend out of the through holes. The first insulating member 40 can be used to insulate the first supporting members 11 from the current collecting portion 22, which achieves a simple structure and low cost.

In some embodiments of the present application, the first supporting members 11 are arranged on the surface of the end cover 10 facing the interior of the battery cell 1000; the first supporting members 11 are cylindrical bosses; the second supporting member 22b is arranged on a surface of the current collecting portion 22 facing the end cover 10; the second supporting member is a bump; and in the thickness direction of the end cover 10, projections of the bosses are located within a projection of the bump, and the projection of the bump is intersected with the projection of the pressure relief structure. At this time, the first supporting members 11 and the second supporting member 22b have simple structures and are easy to manufacture. The bump may be a reinforcing rib integrally formed with the current collecting portion 22, that is, the current collecting portion is partially thickened to serve as the second supporting member 22b. The bump may not be integrally formed with the current collecting portion, but is connected to the current collecting portion 22 by means of welding, bonding, or riveting.

In some embodiments of the present application, referring to Fig. 1 and Fig. 2, the assembling portion 21 includes an assembling section 21a and a folded section 21b connected with each other; the assembling section 21a is in insulating connection to the end cover 10; two ends of the folded section 21b are respectively connected to the assembling section 21a and the current collecting portion 22, and the two ends are separately bent relative to the assembling section 21a and the current collecting portion 22; and the current collecting portion 22 is located on one side of the assembling section facing away from the end cover 10.

At this time, the assembling portion 21 is composed of the assembling section and the folded section 21b. The folded section 21b can be used to form a pressure relief gap between the current collecting portion 22 and the end cover 10, and the folded section 21b is used to connect the assembling section 21a to the current collecting portion 22. In actual operation, the current collecting member 20 can be straightened and stretched first to weld the terminal post 60 to the assembling section 21a, and then the folded section 21b is bent to form the pressure relief gap, which is more convenient for welding the terminal post 60 to the assembling section 21a.

Of course, in other embodiments, other ways can also be used to achieve the solution of maintaining the pressure relief gap between the current collecting portion 22 and the end cover 10, which is not specifically limited here.

In some embodiments of the present application, since the gap between the current collecting portion 22 and the end cover 10 is relatively small, a thickness of the second supporting member 22b ranges from 0.2 mm to 0.5 mm, so as not to affect the pressure relief of the pressure relief space between the current collecting portion 22 and the end cover 10 in the normal state. Preferably, the thickness range of the second supporting member 22b is 0.3 mm.

In some embodiments of the present application, referring to Fig. 1 and Fig. 2, the end cover assembly 100 further includes a second insulating member 50, a riveting member 80, terminal posts 60, and sealing members 70. The second insulating member 50 is arranged on one side of the end cover 10 facing away from the interior of the battery cell 1000. The riveting member 80 is located on one side of the second insulating member 50 facing away from the end cover 10. Two ends of the terminal posts 60 are welded and connected to the riveting member 80 and the assembling portion 21. The terminal posts 60 are arranged on the end cover 10 in a penetrating manner, and are in hermetical and insulating connection with the end cover 10 through the sealing members 70.

Referring to Fig. 1 to Fig. 4, in a preferred embodiment of the present application, the end cover assembly 100 includes an end cover 10, a current collecting member 20, bosses (serving as the first supporting members 11), and a reinforcing rib (serving as the second supporting member 22 b). The end cover 10 is provided with a pressure relief structure 30, and the current collecting member 20 is located on one side of the end cover 10 configured to face the interior of the battery cell 1000. The current collecting member 20 includes a current collecting portion 22 and an assembling portion 21 connected between the end cover 10 and the current collecting portion 22, and the current collecting portion 22 is provided with pressure relief holes 22a for circulating fluid. The bosses and the reinforcing rib are separately arranged on two side surfaces, facing each other, of the end cover 10 and the current collecting portion 22, and projections of the bosses and a projection of the reinforcing rib in a thickness direction of the end cover 10 are intersected. There are two bosses arranged at intervals around the pressure relief structure 30, and there is one reinforcing rib which can support all the bosses. In the thickness direction of the end cover 10, projections of the pressure relief holes 22a and a projection of the pressure relief structure 30 are staggered.

In a specific embodiment of the present application, a specific assembling process of the end cover assembly 100 is as follows:
1) welding the two metal bosses to both sides of the pressure relief structure 30 of the end cover 10 as the first supporting members 11;
2) welding a metal sheet to a position, directly facing the metal bosses and the pressure relief structure 30, of the current collecting portion 22 of the current collecting member 20 as the second supporting member 22b;
3) welding the assembling portion 21 of the current collecting member 20 in the step 2) to the terminal posts 60;
4) assembling the welded bodies obtained in the step 3), and assembling the first insulating member 40 below the end cover 10, and mounting sealing rings at joints between the terminal posts 60 and the end cover 10;
5) mounting the second insulating member 50 on the end cover 10; and
6) arranging the riveting member 80 on the second insulating member 50, and riveting parts of the terminal posts 60 extending out of the second insulating member 50 to the riveting member 80.

Another aspect of the present application provides a battery cell 1000, including a case 200, an electrode assembly 300, and the end cover assembly 100 described in any of the above embodiments. The case 200 is provided with an opening. The electrode assembly 300 is accommodated in the case 200 and is connected to one side of the current collecting portion 22 facing away from the end cover 10. The end cover assembly 100 covers and closes the opening.

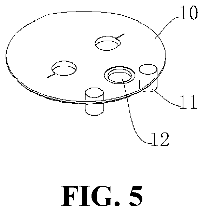

Specifically in the embodiments, referring to Fig. 5, the case 200 is provided with two openings. The end cover assembly 100 is arranged at the two openings to close the case 200 and protect the electrode assembly 300 mounted in the case 200. Opposite ends of the electrode assembly 300 are formed into a first tab and a second tab, and are correspondingly connected to the current collecting portions 22 of the two end cover assemblies 100. A first tab tape 510 and a second tab tape 520 are further arranged around the first tab and the second tab to insulate the tabs from the case 200.

Another aspect of the present application provides a battery, including a box body and the battery cell 1000 described in any solution above. The battery cell 1000 is mounted in the box body.

In a specific embodiment, the battery cell is a cylindrical battery cell.

Another aspect of the present application provides an electrical device, including the battery described in any solution above. The battery is configured to provide electric energy.

The various technical features in the foregoing embodiments may be randomly combined. For concise description, not all possible combinations of the various technical features in the above embodiments are described. However, provided that combinations of these technical features do not conflict with each other, the combinations of the various technical features are considered as falling within the scope of this specification.

The foregoing embodiments merely express several implementations of this application. The descriptions thereof are relatively specific and detailed, but are not understood as limitations on the scope of the present application. A person of ordinary skill in the art can also make several transformations and improvements without departing from the idea of this application. These transformations and improvements fall within the protection scope of the present application. Therefore, the protection scope of the patent of the present application shall be subject to the appended claims.

## Claims

1. An end cover assembly, applied to a battery cell and comprising:
an end cover, provided with a pressure relief structure, wherein the pressure relief structure is configured to act when heat or pressure inside the battery cell reaches a threshold, so as to release the heat or pressure;
a current collecting member, located on one side of the end cover facing the interior of the battery cell and comprising a current collecting portion and an assembling portion, wherein the assembling portion is located between the end cover and the current collecting portion and is configured to be connected to the end cover and the current collecting portion; the current collecting portion is provided with a pressure relief hole for allowing fluid to pass;
wherein first supporting members and a second supporting member are separately arranged on two side surfaces, facing each other, of the end cover and the current collecting portion; and projections of the first supporting members and a projection of the second supporting member are intersected in a thickness direction of the end cover, so as to ensure that a pressure relief space in which the fluid flows from the pressure relief hole to the pressure relief structure always exists between the end cover and the current collecting portion.

2. The end cover assembly according to claim 1, wherein in the thickness direction of the end cover, a projection of the pressure relief hole and a projection of the pressure relief structure are staggered.

3. The end cover assembly according to claim 1 or 2, wherein in the thickness direction of the end cover, the projections of the first supporting members and the projection of the pressure relief structure are not intersected.

4. The end cover assembly according to claim 3, wherein the quantity of the first supporting members is at least two, and all the first supporting members are spaced apart from each other around the pressure relief structure.

5. The end cover assembly according to any one of claims 1 to 4, wherein in the thickness direction of the end cover, the projections of the first supporting members are within a projection range of the second supporting member.

6. The end cover assembly according to any one of claims 1 to 5, wherein in the thickness direction of the end cover, the projection of the second supporting member and a projection of the pressure relief structure are intersected.

7. The end cover assembly according to any one of claims 1 to 6, wherein the first supporting members are configured to be insulated from the current collecting portion.

8. The end cover assembly according to claim 7, wherein the end cover assembly further comprises a first insulating member; the first insulating member is mounted to the end cover; and at least part of the first insulating member is located between the current collecting member and the end cover, so as to insulate the end cover from the current collecting member.

9. The end cover assembly according to claim 8, wherein avoidance portions are arranged at positions, corresponding to the first supporting members, on the first insulating member, and the avoidance portions cooperate with the first supporting members, to accommodate the first supporting members.

10. The end cover assembly according to claim 9, wherein the avoidance portions are first concave portions formed on a surface of the first insulating member facing the end cover and sunken in a direction away from the end cover; the first supporting members are in concave-convex fit with the first concave portions, so that the first supporting members are accommodated in the first concave portions, and ends of the first concave portions away from the end cover are closed to insulate and isolate the first supporting members from the current collecting portion.

11. The end cover assembly according to claim 9, wherein the avoidance portions are through holes penetrating through the first insulating member in a thickness direction of the first insulating member, and the first supporting members are plugged into the through holes.

12. The end cover assembly according to claim 11, wherein in the thickness direction of the end cover, a height of each first supporting member is less than a depth of each through hole, so that after the first supporting members are plugged into the through holes, the first supporting members are not in contact with the current collecting portion.

13. The end cover assembly according to any one of claims 1 to 12, wherein the first supporting members are arranged on the surface of the end cover facing the interior of the battery cell; the first supporting members are cylindrical bosses; the second supporting member is arranged on a surface of the current collecting portion facing the end cover; the second supporting member is a bump; and in the thickness direction of the end cover, projections of the bosses are located within a projection of the bump, and the projection of the bump is intersected with the projection of the pressure relief structure.

14. The end cover assembly according to any one of claims 1 to 13, wherein the assembling portion comprises the assembling section and a folded section connected with each other; the assembling section is in insulating connection to the end cover; two ends of the folded section are respectively connected to the assembling section and the current collecting portion, and the two ends are separately bent relative to the assembling section and the current collecting portion; and the current collecting portion is located on one side of the assembling section facing away from the end cover.

15. A battery cell, comprising a case, an electrode assembly, and the end cover assembly according to any one of claims 1 to 14, wherein the case is provided with an opening; the electrode assembly is accommodated in the case and is connected to one side of the current collecting portion facing away from the end cover; and the end cover assembly covers and closes the opening.

16. A battery, comprising a box body and the battery cell according to claim 15, wherein the battery cell is accommodated in the box body.

17. An electrical apparatus, wherein the electrical apparatus comprises the battery according to claim 16, and the battery is configured to provide electric energy.
